(19)

(11) **EP 3 469 856 B1**

(12) **EUROPEAN PATENT SPECIFICATION**

(45) Date of publication and mention of the grant of the patent:
**02.08.2023 Bulletin 2023/31**

(21) Application number: **17762194.3**

(22) Date of filing: **14.06.2017**

(51) International Patent Classification (IPC):
***H05B 3/34*** *(2006.01)*

(52) Cooperative Patent Classification (CPC):
**H05B 3/342;** H05B 2203/026; Y02B 30/00

(86) International application number:
**PCT/IB2017/000870**

(87) International publication number:
**WO 2017/216631 (21.12.2017 Gazette 2017/51)**

(54) **PRODUCTS WITH EMBEDDED CARBON VEIL HEATING ELEMENTS**

PRODUKTE MIT EINGEBETTETEN CARBONSCHLEIERHEIZELEMENTEN

PRODUITS À ÉLÉMENTS CHAUFFANTS À VOILE DE CARBONE INTÉGRÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.06.2016 US 201662349858 P**

(43) Date of publication of application:
**17.04.2019 Bulletin 2019/16**

(73) Proprietor: **LaminaHeat Holding Ltd.**
**Leixlip, Co. Kildare (IE)**

(72) Inventor: **SAJIC, Peter**
**Broadstone**
**Dorset BH18 8BE (GB)**

(74) Representative: **Scheele Jaeger Wetzel Patentanwälte**
**Goethestraße 21**
**80336 München (DE)**

(56) References cited:
**WO-A1-2010/142781**
**DE-U1-202006 007 731**
**DE-U1-202008 004 481**
**GB-A- 2 414 910**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 469 856 B1

## Description

### FIELD OF THE INVENTION

The present invention relates to products embedded with a carbon veil heating element, and more specifically, to heated surface coverings, such as flooring.

### SUMMARY

The heated floor system according to the invention is defined by claim 1. The heated floor system comprises a section of flooring including an embedded carbon veil heating element, the carbon veil heating element comprising at least two electrically conductive veil busbars spaced apart from one another, at least two floor electrical busbars electrically connected to the at least two veil busbars; and a controller electrically connected to the floor busbars and configured to apply electrical current to the floor busbars sufficient to cause the carbon veil to produce heat in a portion thereof located between the veil busbars. In various embodiments, the floor busbars may be recessed in a subfloor upon which the section of flooring is installed or located behind a baseboard adjacent the section of flooring is installed. The floor busbars typically extend along a length of the section of flooring and are electrically connected to respective sets of veil busbars in the carbon veil heating element in a plurality of locations. The system may also comprise a temperature sensor positioned in a location operable to sense heat emitted from the section of flooring and in communication with the controller, wherein the controller is configured to apply electrical current to the busbars based upon an input signal from the temperature sensor. The flooring product may comprise visible indicia on a surface thereof aligned with each embedded busbar, such as temporary or removable marking or an element of a decorative pattern visible in a finished floor surface facing upward from the floor.

The at least two floor electrical busbars may be connected to and electrically isolated from one another by a matrix of insulation. At least a first length and a second length of continuous busbar track may comprise the at least two floor electrical busbars spaced apart from one another, each length having opposite ends, and one or more connectors configured to electrically connect at least a busbar from the first length to a respective busbar of the second length. Each of the at least two floor electrical busbars may protrude from the opposite ends of the busbar track, and the one or more connectors may comprise at least two annular busbar sheaths connected to and electrically isolated from one another by a matrix of insulation, each sheath internally dimensioned and positioned to mate with the protruding ends of respective busbars from adjoining lengths of busbar track. One or more fasteners may protrude through and electrically connect one busbar to one busbar sheath.

Still another aspect of the invention comprises a busbar track system for use in a heated floor system, the track system comprising at least two busbars, each busbar comprising a conductive metal having a rectangular cross section having a width and a thickness in which the width is greater than 10X the thickness, and a matrix of insulation connecting the at least two busbars together. Yet another aspect of the invention may comprise a busbar track connector for the busbar track system as described herein, the connector comprises at least two busbar sheaths, each busbar sheath comprising a annular conductive metal having a rectangular cross section internally dimensioned to receive one of the at least two busbars, and a matrix of insulation connecting the at least two busbar sheaths together.

There is also herein described a method for installing a heated floor system. The method comprises installing a section of flooring including an embedded carbon veil heating element onto an area of a floor, the carbon veil heating element comprising at least two electrically conductive veil busbars spaced apart from one another, installing at least two electrical floor busbars beneath the section of flooring or on a vertical surface adjacent to the floor, electrically connecting the electrical floor busbars to the veil busbars in the embedded carbon veil heating element, electrically connecting the electrical floor busbars to a controller configured to apply electrical current to the floor busbars sufficient to cause the carbon veil to produce heat in a portion thereof located between the veil busbars.

Still another aspect of a method of making a heated laminar product comprises providing a roll of a carbon veil heating element having a width equivalent to a width of a desired finished roll of laminar product, the heating element having one or more pairs of veil busbars, feeding one end of the roll of the carbon veil heating element between respective ends of upper and lower layers of respective feedstocks of laminar intermediate material, and embedding the carbon veil heating element between the upper and lower layers to form the finished roll of laminar product, such that the carbon veil heating element is less than 1 mm from an upper surface of the laminar product. The laminar product may be, for example, a flooring product or a cover or tarp. In an embodiment in which the laminar product is a flooring product, the method may comprise laminating the roll of the carbon veil heating element between a top layer of flooring intermediate fed from a first roll and a bottom layer of flooring intermediate fed from a second roll. The first and second feedstocks may each be extruded. In an embodiment in which the laminar product is a floor underlayment, the first layer may comprise a film and the second layer may comprise a foam.

Yet another aspect of the invention comprises a carbon veil heating element feedstock comprising a carbon veil heating element having a plurality of pairs of electrically conductive veil busbars spaced apart from one another along a width of the feedstock and the feedstock configured as a spirally wound cylindrical roll along a length of the feedstock.

## BACKGROUND

Conventionally, floor heating products consist of either bulky electrical wires (which provide resistive heating) or bulky liquid tubes (which provide hydronic heating) installed between the floor and the sub-floor. Installation of a heated floor thus required the homeowner to install either the bulky electrical wires or liquid tubes directly onto the sub-floor, with the flooring material (e.g. tile, hardwood, etc.) installed on top of the electrical wires or liquid tubes.

This process is time consuming, labor intensive and expensive. In addition, the heating elements (i.e. the wires or tubes) are placed well below the floor surface, due to the thickness of the flooring itself. As a result, the heat produced by the wires or the liquid filled tubes takes a long time to heat the actual walking surface of the floor. Therefore, this process is not energy efficient and creates a long lag time between activating the heater and the flooring actually reaching the desired temperature.

GB 2 414 910 A for example discloses a heated membrane that comprises a random dispersal of waste carbon fibre ends that are well coated with carbon over the entire surface of a PVC base eg polyester which forms the heated membrane element. The element, an insulating seal and weather shield may be incorporated into a laminated structure which may additionally include a conductive earth shield. The laminated membrane may be slotted to for a zig-zag conductive path and conductive strips form busbars for the element.

DE 20 200 800 4481 U1 describes a wall or floor covering made of a sheet-like material with at least one layer on which a film is laminated with the help of an adhesive layer, which film has electrically conductive heating elements, wherein with the help of a further adhesive layer an electrically conductive first fabric which is electrically insulated from these heating elements is laminated on.

## BRIEF DESCRIPTION OF THE FIGURES

FIG. 1A shows a magnified image of the carbon fibers in an exemplary carbon veil heating element.

FIG. 1B depicts an exemplary carbon veil heating element.

FIG. 2 shows a cross sectional comparison view of a flooring product having both a carbon veil heating element and a conventional wire/pipe heating element.

FIG. 3 shows a cross sectional comparison view of a flooring product having a heating element installed below the floor and a carbon veil embedded just below the surface.

FIG. 4 shows an energy graph of the energy consumed by the embedded carbon veil vs. a base heater installed below the flooring.

FIG. 5 shows a block diagram of the control system for controlling the heated flooring product.

FIG. 6 shows a flowchart of the operation of the system in FIG. 5.

FIG. 7A shows a first exemplary installation of an exemplary heated flooring product in which the floor busbars are recessed in the subfloor.

FIG. 7B shows a first exemplary fastener system for connecting floor busbars to veil busbars.

FIG. 7C shows a second exemplary fastener system for connecting floor busbars to veil busbars.

FIG. 7D shows an exemplary pattern having visual indicia usable by an installer to determine the alignment of the veil busbars in an exemplary heated flooring product.

FIG. 8 shows a second exemplary installation of an exemplary heated flooring product in which the floor busbars are positioned on or in the wall, behind a baseboard.

FIG. 9 shows an exemplary system for manufacturing the heated flooring product.

FIG. 10A illustrates an exemplary Power Track busbar track for providing floor busbars.

FIG. 10B depicts a cross section of the exemplary Power Track busbar track of FIG. 10A.

FIG. 10C depicts a longitudinal section of two lengths of Power Track busbar track joined by an exemplary connector.

FIG. 10D depicts a longitudinal section of the exemplary connector of FIG. 10C.

FIG. 10E depicts a perspective view of the exemplary connector of FIG. 10D and portions of respective busbar to be connected.

FIG. 11 depicts an exemplary system for manufacturing the Power Track busbar track and connectors.

## DETAILED DESCRIPTION

One aspect of the invention comprises a flooring product comprising an embedded electrically conductive nonwoven carbon veil. The carbon veil is constructed of electrically conductive material, such as discontinuous nonwoven carbon fiber, such as is described in PCT/IB2016/000095.

Generally, the carbon veil may be formed by wet laid manufacturing methods from conductive fibers (specifically carbon), non-conductive fibers (glass, etc.), one or more binder polymers and optional flame retardants. Preferred lengths of the fibers are in a range of 6mm to 12 mm, but may vary. Exemplary binder polymers may include polyvinyl alcohol, copolyester, crosslink polyester, acrylic and polyurethane. Exemplary flame retardant binders may include polyamide and epoxy. Suitable wet laid techniques for forming the carbon veil may comprise a state of the art continuous manufacturing process. Generally, the amount of conductive fiber required depends upon the type of conductive fiber chosen, the voltage and power which will be applied to the fiber, and a physical size/configuration of the heating element.

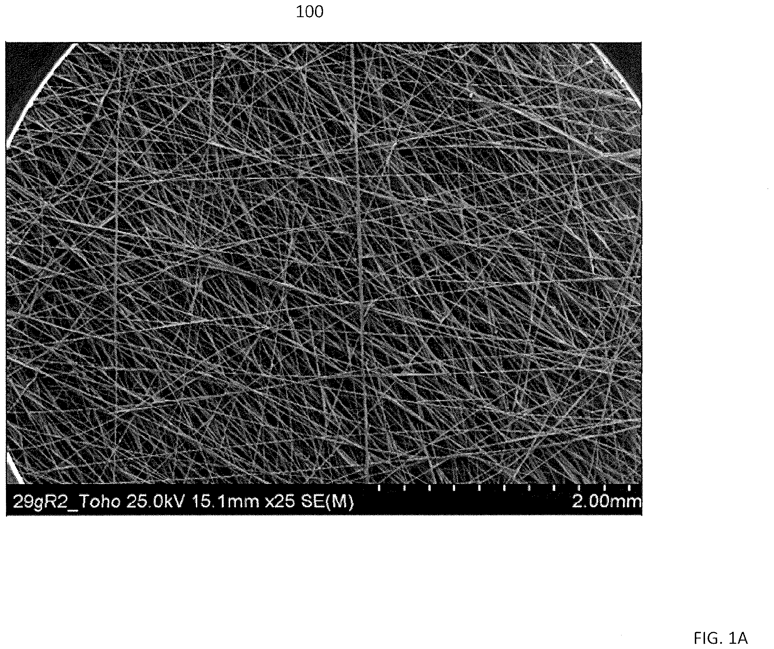

Carbon veils are beneficial for use in heating products in consumer applications (i.e., flooring) since they have desirable electrical characteristics, are exceptionally thin, and are relatively inexpensive to manufacture. Shown in FIG. 1A is a magnified photograph of a representative portion of an exemplary nonwoven fiber carbon veil that is well suited in connection with the claimed invention. As can be seen from the photograph, the fiber sheet comprises a plurality of individual, substantially straight untangled fibers all of which fall within a specified range of length (e.g., 6-12 mm). While each individual fiber of the nonwoven sheet is desirably in contact with one or more other individual fibers as part of a nonwoven structure of the sheet, ideal contact differs from entanglement in that entanglement typically involves two or more fibers wound around each other along a longitudinal axis of fibers, whereas preferred contact comprises straight, unentangled fibers having multiple points of contact with other straight unentangled fibers.

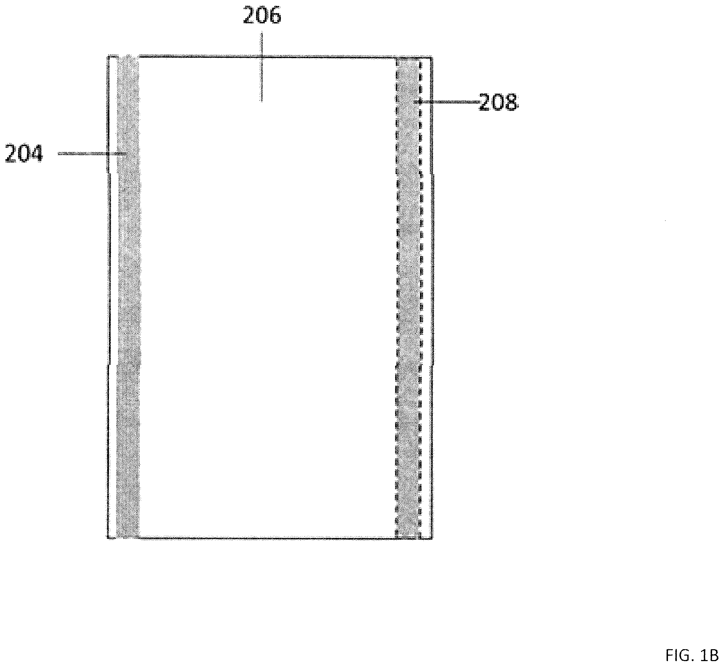

Shown in Fig. 1B is a top view of an exemplary heating element 100 comprising a carbon veil comprising electrically conductive veil busbar strips 204 and 208, which busbars typically comprise a copper layer coating over the carbon veil, and section 206 located between the busbars. Although not shown, in exemplary embodiments, electrical connectors are typically connected to each of the veil busbars to apply a voltage across the busbars that produces an electrical current flowing through the veil, which current causes section 206 to evenly generate heat resulting from the electrical resistance of section 206.

The carbon veil heating element may be manufactured at generally any size (length, width, and at any thickness, but preferably with a thickness of less than 1 mm, and more preferably with a thickness of <40 μm, and having a weight of <50 g/m2. The extremely low weight and thickness makes the carbon veil non-invasive such that it does not change the properties of a product into which it is embedded. Additionally, because the veil is porous, it lends itself to being embedded in products in which the product matrix impregnates the veil, such as in flooring products (e.g. vinyl, PVC, or other polymer flooring sheet products, linoleum, underlayment for tile, hardwood, carpet, etc.). The characteristics of the veil are particularly beneficial for use in flooring applications comprising thin sheeting products, such as polyvinyl chloride (PVC) flooring, which is typically only between 3mm and 4 mm thick. The minimal thickness of the carbon veil permits it to be embedded just below the surface of the flooring (i.e., close to the walking surface). Embedding the carbon veil just below the walking surface of the flooring minimizes heat up time and energy consumption.

PERFORMANCE OF HEATING FLOORING SYSTEMS WITH EMBEDDED CARBON VEILS

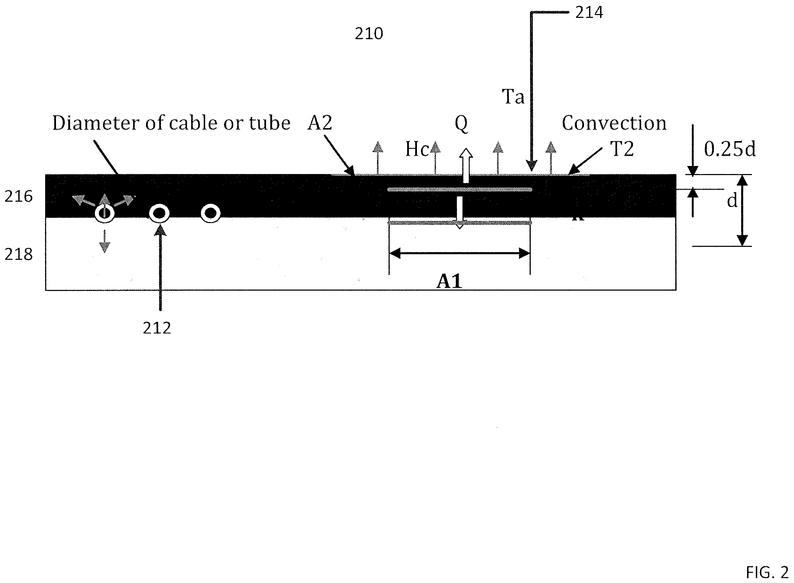

A comparison between exemplary installations of a conventional electric wire/liquid tubing heater and an exemplary embedded carbon veil is illustrated relative to a cross section of a floor structure 210 depicted in FIG. 2. Specifically, electrical wires and/or tubing 212 are shown installed between subfloor 218 and the flooring section 216. As shown in FIG. 2, the wires/tubes are buried a significant distance below the surface of the flooring section 216 and by their very nature constitute relatively hotter linear portions defined by each of the wires/tubes separated by relatively less hot spaces between the wires/tubes. In contrast, carbon veil 214 is embedded just below the floor surface and evenly covers an entire area A1. Generally, the carbon veil produces heat Q over surface area A2, which is transferred to the ambient air by convection. The equation for computing heat Q generated by the embedded carbon veil is described in equations 1 and 2 below.

ie:-

$$I^2R = \frac{kA_1(Ts-T_1)}{d} = HcA_2(Ta-Ts) = Q \quad \text{heat flow (Watts)} \qquad (1)$$

$$Q \propto A_1\, k\, (T_2 - T_1) = A_2\, Hc\, (Ta - T_2) \text{ where Hc = thermal coefficient (constant)}$$

K =thermal conductivity of floor material

$T_1$ = Temp of heater element

$T_2$ =Temp of floor surface

Ta= ambient air temp

$A_1$ = surface area heating element

$A_2$ = surface area of generated heat (2)

Tables 1 and 2 below show a comparison between the characteristics of embedded carbon veil 214 and wires/tubes 212 shown in FIG. 2, based upon known characteristics of the Applicant's Power Film product, which comprises a coated carbon veil. The basic advantages of using an embedded carbon veil (Applicant's Power Veil product) are not materially changed versus the Power Film product. As shown in Table 1, the temperature of the heating element for the embedded veil only has to reach a temperature of 33°C, whereas the tubes 212 must reach a temperature of 49°C and the electric wires 212 must reach a temperature of 81°C to achieve the same temperature of 21°C at the heated floor surface.

Table 1

| ***For heating $\alpha$ square meter assume typically: k = 2 W/m$^2$ °C - $T_2$ = 28°C and $T\alpha$ = 21°C*** | | |
|---|---|---|
| ***LaminaHeat* Film**<br>**Width =1mt Length 1mt** | **Electric Cable**<br>**Diameter = 1.5mm**<br>**Length 12mts (twin core 75mm spacing)** | **Water Heating**<br>**Tube dia = 16mm**<br>**Length= 6mts (150 mm spacing)** |
| $A_1$ = 1m2<br>$T_1$ = 33°C | $A_1$ = 12 × 0.003= 0.036m2<br>$T_1$ = 81°C | $A_1$ = 6 × 0.016 = 0.096 m2<br>$T_1$ = 49° C |
| Eq 1: - 1 ×2 (24-33)= $A_2$ He (21-28)<br>$A_2$ - He = 1.43 m2 | Eq 1: - 0.036× 2 (28-81) =$A_2$ He (21-28)<br>$A_2$ - He = 0.544 m2 | Eq 1: - 0.096×2 (28-49)=$A_2$ Hc(21-28)<br>$A_2$ - He = 0.576 m2 |
| ***NOTE: He is constant if we assume Hc =1 W/m2 °C this simplifies the calculations and so $A_2$ = 1.43, 0.544,0.576 m$^2$*** | | |

Thus, heating the floor to a desired temperature with an embedded carbon veil just below the floor surface only requires heating the carbon veil to a much lower temperature than the electric cable and/or the water heating tubes, the carbon veil based system consumes much less power.

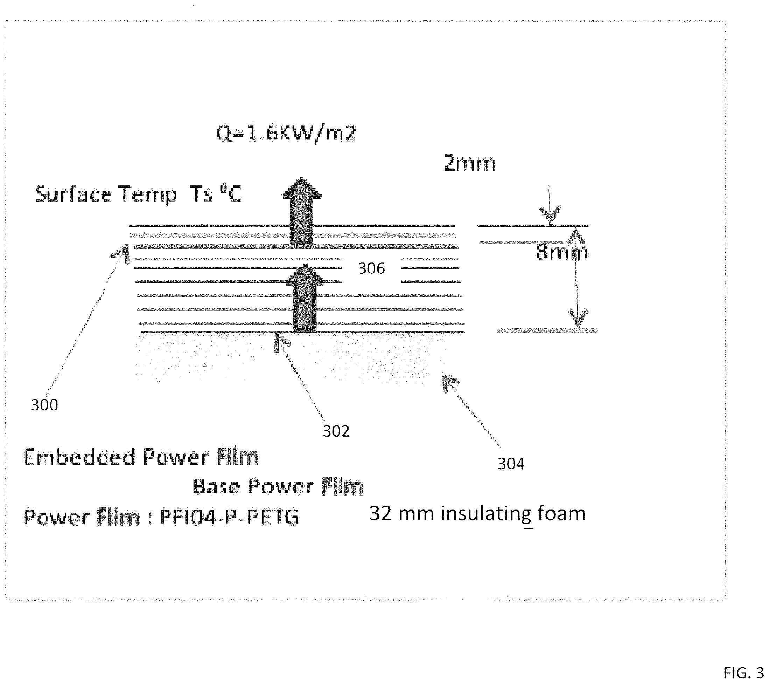

FIG. 3 further illustrates the impact of distance of the carbon veil relative to the floor surface. For example, the carbon veil in position 302 (at the "base") between subfloor 304 and floor covering 306, is roughly 8 mm ("d" in Fig. 2) from the top surface of the floor, whereas when embedded directly into the floor at position 300, it is only 2 mm ("0.25d" in FIG 2) from the walking surface of floor 306. In general, the closer the carbon veil is positioned from the top surface of the floor, the more efficient the carbon veil will be in heating up the floor surface.

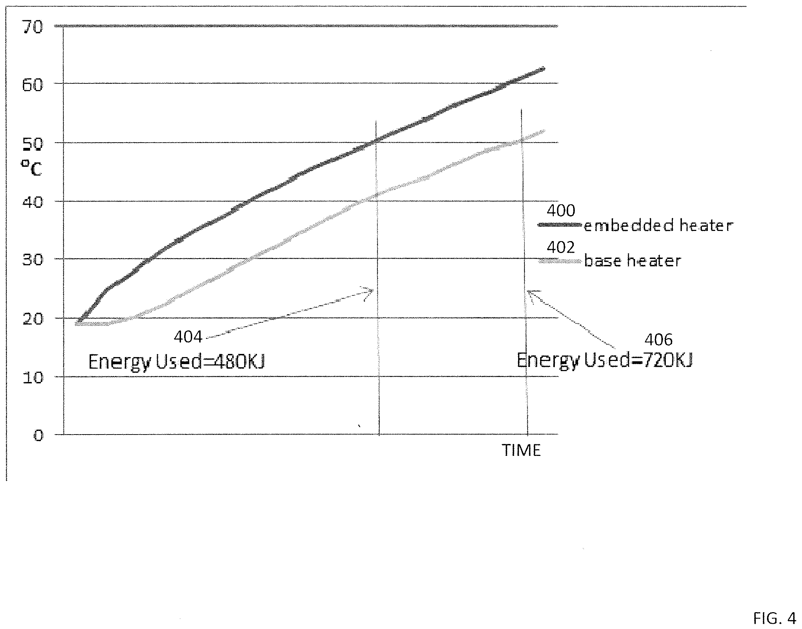

An example of the relative energy performance a veil embedded directly below the surface and a veil positioned between the floor and subfloor is shown in the plot of FIG. 4. Specifically, FIG. 4 shows a plot of time versus surface temperature of the floor for heat flow through a woven glass/epoxy laminate, which approximates the difference in having the embedded carbon veil heater just below the surface of the floor versus the carbon veil positioned in between the flooring and the subflooring. As illustrated in FIG. 4, the surface temperature of the flooring increases more rapidly when the carbon veil is positioned just below the floor surface. The embedded carbon veil utilizes approximately 42% less energy overall in the span of time depicted. Assuming 80% of the total energy is required in the heat up stage, and 20% of the total energy is required to maintain the surface temperature over a typical ON cycle of the heater, the difference in embedding height constitutes a difference that is essentially equivalent to (0.8 x 0.42) = 34% energy savings. Thus, the overall energy usage of the Embedded Power Film is 0.66 the value of energy usage in the "Base" Power Film.

Table 2 shows the difference in energy needed for respective heating elements to supply the desired temperature, including the difference between positioning the carbon veil at "Embedded" and "Base" positions as described above.

Table 2

| | | | |
|---|---|---|---|
| Base ***Lamina Heat Power Film*** | | = | **100 W/m2** |
| Embedded ***Lamina Heat Power Film*** | **100 × 0.66** | = | **66 W/m2** |
| Electric cable heating systems | **3.32/1.22 × 100** | = | **272W/m2** |
| Water heating systems | **3.32/1.35 × 100** | = | **246W/m2** |

EXEMPLARY HEATED FLOORING SYSTEMS WITH EMBEDDED CARBON VEILS

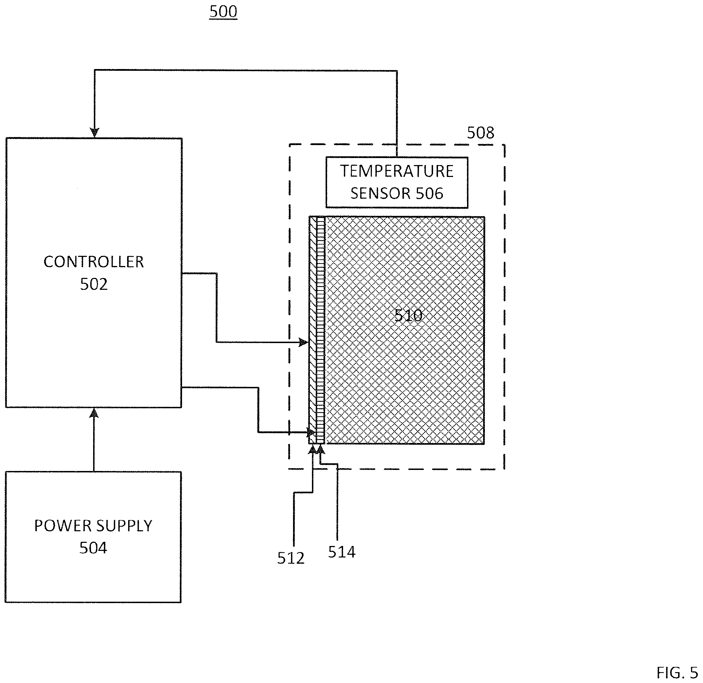

An example of a heated flooring system 508 including a controller is shown in FIG. 5. Specifically, FIG. 5 shows a system with a heated floor section 510 which has a carbon veil embedded directly below its walking surface. Separate from the heated flooring product 510 are electrical (floor) busbars 512 and 514, as well as an optional temperature sensor 506. In general, during operation, controller 502 controls the power supplied to floor busbars 512 and 514 via power supply 504. Power may optionally be controlled based on a temperature setpoint of optional temperature sensor 506. Because heated flooring section 510 includes the embedded carbon veil, during installation, the heated flooring product 510 is simply laid on the floor and then electrically connected to floor busbars 512 and 514. The floor busbars 512 and 514 may be integrated into a "Power Track" product that facilitates quick installation, as described herein later.

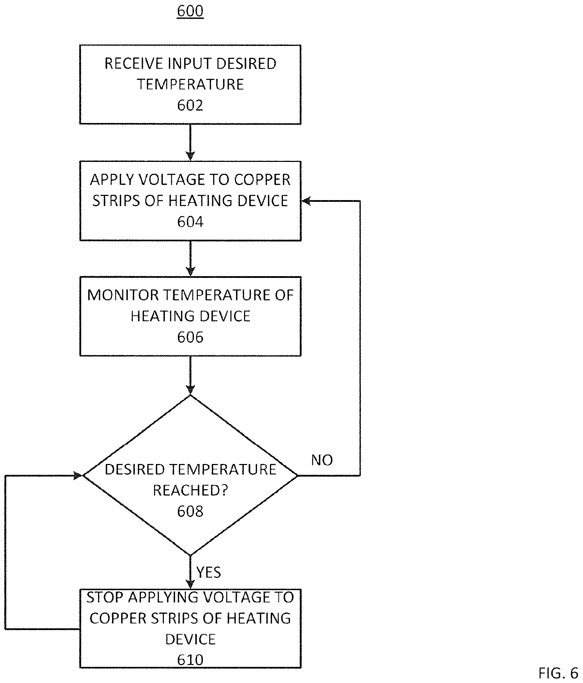

The operation of the heated flooring system shown in FIG. 5 is described in detail in the flowchart 600 of FIG. 6. In step 602, controller 502 receives an input from the user for setting a desired temperature (e.g., the temperature of the floor surface). The input device is not shown in FIG. 5, but can include a dial, button, touchscreen, etc. In step 604, controller 502 applies a predetermined voltage to floor busbars 512 and 514 which are electrically connected to the veil busbars in the carbon veil embedded within flooring 510. The carbon veil then produces heat in response to the electrical current flowing through it. In step 606, controller 502 uses either a timer or a control signal from temperature sensor 506 to monitor the temperature of the floor itself. For example, temperature sensor 506 (which is optional) may be in direct contact with the floor or in close proximity to the floor. In step 608, controller 502 then determines if the desired temperature of the floor has been reached. If the desired temperature of the floor has been reached, then in step 610, controller 502 stops applying voltage to busbars 512 and 514. If, however, the desired temperature is not reached, controller 502 continues applying the voltage to the busbars. The temperature sensor can thus cycle the power to the heater on and off as necessary, in accordance with any algorithm to known in the art for use in maintaining heated flooring or ambient air temperatures, to maintain a desired temperature at the floor surface or of the room, generally.

EXEMPLARY INSTALLATION METHODS

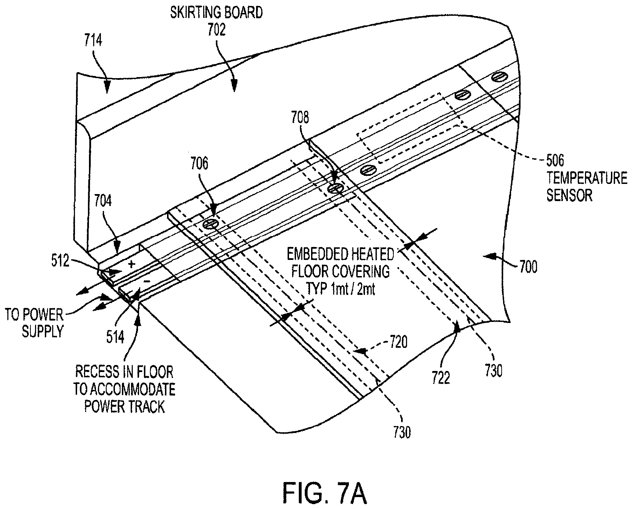

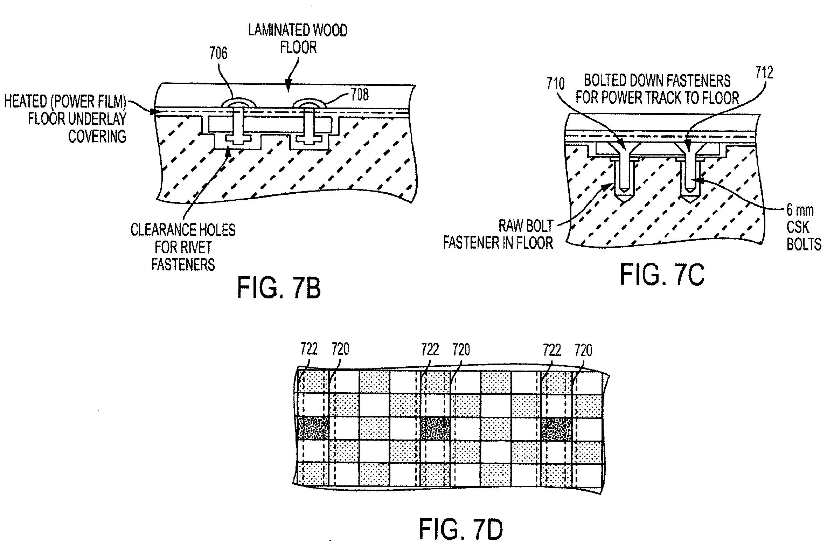

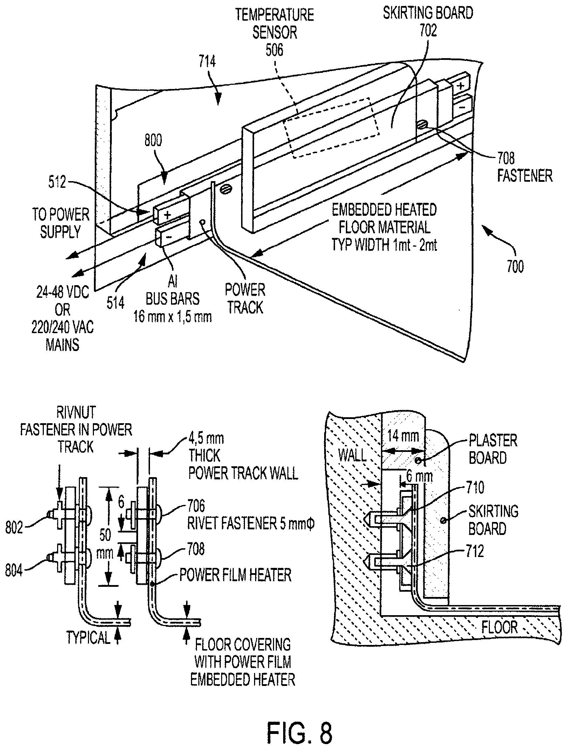

Embedding the carbon veil into the flooring product greatly simplifies installation of a heated floor. Exemplary installations of a PVC floor product with an embedded carbon veil are is shown in detail in FIGs. 7 and 8.

FIG. 7 illustrates a PVC flooring product installed in a corner of a room adjacent a wall. During the installation process, a channel 704 is cut from the subfloor. A recessed floor busbar system, including busbars 512 and 514, is then installed in this channel, such as using the "Power Track" product as described herein. Once the floor busbars are in place adjacent the baseboard 702 (also known as a skirting board or skirt board) of wall 714, the PVC flooring 700 with the embedded carbon veil may then be laid (e.g. using adhesive backing) over the desired area of the floor to be covered, including over the recessed floor busbar system. Thus, in the example illustrated in FIG. 7, the PVC flooring 700 not only covers the subfloor but also covers floor busbars 512 and 514.

To make electrical connections with busbars 512 and 514, conductive fasteners, such as bolts and/or screws or the like 706 and 708, are utilized to penetrate the flooring product through the veil busbars and into the floor busbars. Each conductive fastener essentially pierces the electrically conductive veil busbars of the carbon veil and therefore establishes an electrical connection from the veil busbars to the floor busbars 512 and 514 (i.e., respective positive and negative busbars are connected to one another).

FIG. 7 depicts exemplary cross sections of bolts 706 and 708 as well as an example of countersunk screws 710 and 712 that may be used. Temperature sensor 506 may also be installed inside the recessed portion of the subfloor (i.e., below the flooring) to be in close proximity to the flooring that it controls. Temperature sensor 506 (regardless of its installation location) provides the ability to sense the actual temperature of the floor, if desired, and report this information back to the controller. The connection between the temperature sensor may be wired (related wiring not shown in the figure, for simplicity, but the various connections required will be understood to one of skill in the art) or may be wireless, using Bluetooth® or any other wireless communication protocol.

In general, floor busbars 512 and 514 are connected to controller 502 as shown in FIG. 5. The controller 502 then applies voltage across these busbars which then conducts electricity through the carbon veil of the flooring product via the connection between the veil busbars in the carbon veil and the conductive fasteners 706 and 708 located periodically on the floor along the length of the floor to align with the veil busbars.

Alternatively, rather than create a channel in the subfloor, floor busbars 512 and 514 may be installed on or in the adjacent wall 714, as illustrated in FIG. 8. Although a channel or recess 800 may be cut into the wall to accommodate the floor busbars, the busbars may simply be installed on top of the wall and then covered by the baseboard.

In this example, once the busbars are installed on the wall or within the channel, the PVC flooring with the embedded carbon veil 700 may be laid on the subfloor. During installation, PVC flooring 700 may be cut to a greater length than the floor area to be covered, such that the flooring overlaps the wall a by a desired length (e.g. about 4 inches) to permit it to overlap the wall, wherein it is connected to floor busbars 512 and 514. The PVC flooring may be screwed directly to floor busbars 512 and 514 utilizing conductive fasteners in locations 706 and 708 or 802 and 804, similar to the installations described and shown previously on the floor, but in this case oriented on the wall rather than on the floor.

Once the flooring is installed throughout the desired area of the room, baseboard 702 may then be installed against the base of wall 714. The beneficial aspect of this embodiment is that not only are the floor busbars 512 and 514 hidden by the baseboard 702, but the fasteners 706 and 708 or 802 and 804 along the electrically connected edge of the floor are also covered by baseboard 702. This allows a seamless installation that is visually appealing, and also enables troubleshooting of the electrical connections by simply removing the baseboard rather than having to lift up a section of the flooring.

In the examples described in FIGs. 7 and 8, floor busbars 512 and 514 are connected to controller 502, which applies electrical current to the busbars. This electrical current then flows from the floor busbars through fastneners 706 and 708 and through veil busbars to create the electrical potential across the embedded carbon veil in the PVC flooring, which causes the carbon veil to emanate heat. This effectively produces an even heat throughout the entire flooring area due to the uniform resistance of the carbon veil and the more uniform coverage of the heated portions of the veil across the entire floor surface, as compared to the relatively small linear hot spots and relatively larger gaps therebetween created by systems employing electrical lines or water tubes of the prior art.

EXEMPLARY MANUFACTURING METHODS

As described, a benefit to the overall system is that the carbon veil may be embedded directly into the flooring sheet itself (e.g., embedded directly into the PVC flooring). This embedding process is performed during manufacturing of the PVC flooring itself.

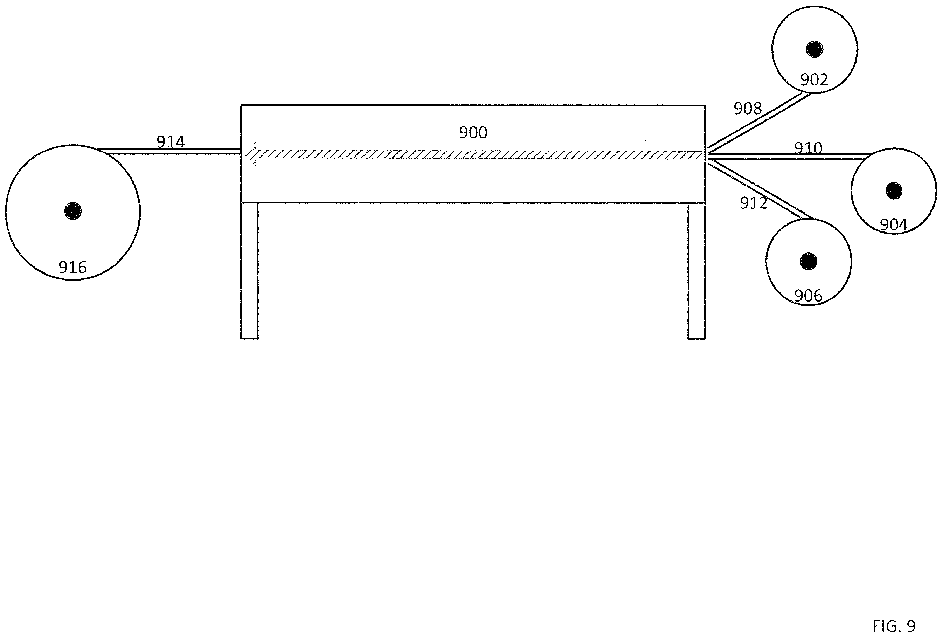

Shown in FIG. 9 is an exemplary process for manufacturing a PVC flooring sheet having an embedded carbon veil. An upper layer PVC sheet 908 fed from spool 902 and a lower layer PVC sheet 912 fed from spool 906 are fed into a laminator 900, with carbon veil 910 fed from spool 904 sandwiched between sheet 908 and sheet 912. Carbon veil 910 may be a "raw" carbon veil comprising only the veil with the conductive veil busbars applied thereto, or the veil may have a coating, such as a PVC or anyother type of coating, on one or both sides, making the veil intermediate similar to Applicant's Power Film product, to facilitate bonding of the upper and lower layers to the veil intermediate. Spool 904 includes a carbon veil pre-cut to match the widths of the upper and lower PVC sheet layers dispensed from spools 902 and 906, and has at least one set (typically multiple sets) of veil busbars embedded therein at a desired spacing from one another. All three layers are laminated together to produce a PVC flooring product 914 with an embedded carbon veil. Although discussed herein in connection with a PVC flooring product, it should be understood that a similar technique may be used for the manufacture of flooring from any non-conductive material capable of being laminated or otherwise joined together to sandwich the carbon veil therebetween. Additionally, although depicted with only a minimum number of 3 layers, it should be understood that additional layers may be present above or below the upper and lower layers sandwiching the veil as shown and described herein.

Finally, although well suited PVC flooring products that serve as the upper layer surface covering, the flooring products as described herein may refer to underlayments, such as may be installed under carpet, tile, hardwood, etc. Although the veil will typically be more than 1 mm below the uppermost floor surface when embedded in such an underlayment, the advantages of low energy consumption and evenly distributed heat are still present. Thus, for example, the flooring product as described herein may comprise an acoustic underlayment film. Typically such films are typically 1.0 to 2.0 mm thick with a 2-3 mm insulating foam backing. The carbon veil may be thus embedded between the film and the foam. Such a veil may be manufactured by a lamination process as described above, or in an extrusion process, in which the polymer melt from the film extrusion penetrates the porous veil and fuses the acoustic film to the insulating foam.

It should also be understood that although described herein with respect to a flooring product, the manufacturing process herein described is not limited only to floor coverings, but may also be used to create any laminar product for any use known in the art, and may be particularly useful for fabricating wall coverings as well as tarps or covers. In particular, a laminating process as described above may be used for creating a heated tarp or cover for a dump truck or other open top truck, to prevent ice or snow build-up during the winter that may otherwise create a hazard for other drivers when built-up ice sloughs off non-heated covers at highway speeds. Thus, for example, a carbon veil as described herein may be embedded into a 3 mm thick PVC tarpaulin layer during production, similar to the method as described herein for flooring, so that the veil is safely embedded approximately 1 mm below the outer surface of the tarp and activated via the truck battery by a controller. The controller may, for example, have inputs connected to a sensor configured to sense a combination of moisture and temperature at which to apply heat to prevent ice build-up. Power connections to the tarp may be provided using a power cord with a positive terminal attached to one veil busbar and a negative terminal attached to the other veil busbar, using connectors that affix to and penetrate the tarp and the veil busbars in the appropriate positions.

For manufacturing of finished products in sheet form, it is therefore beneficial to provide the carbon veil in a spool or roll form comprising the carbon veil of a desired width, with the veil busbars spaced at desired widths to provide a desired level of heating potential. PVC flooring manufacturers can then simply order a spool of a carbon veil of a desired width and length with veil busbars at a desired spacing to provide a desired heating capability. This spool can then simply be fed into the already existing PVC floor laminating machinery along with the other layers of the PVC flooring to produce an overall heated floor product.

POWER TRACK™

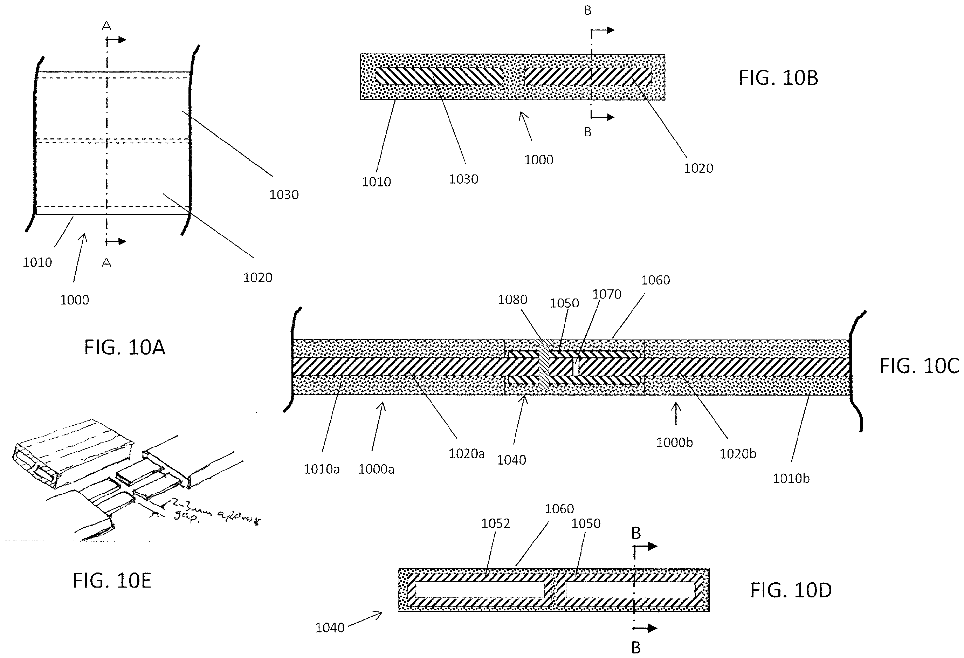

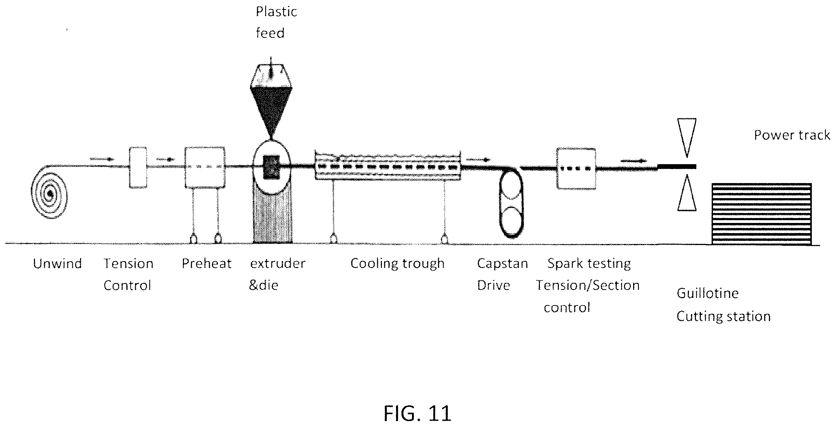

To facilitate easy installation of the flooring system described herein, sets of 2 or 3 conductive floor busbars may be integrated together into a single product comprising the busbars bound together in a common insulation matrix, as shown in Figs. 10A-10B. In an exemplary embodiment, each busbar may have a rectangular cross section of 20 mm wide x 1.5 mm thick, may comprise preferably pure aluminium grade or copper electrical grade materials of construction, and may have an extruded polymer sheath, such as 1.5mm thick PVC. Figs. 10A and 10B depict a 2-busbar product 1000 in which, for example, the "hot" busbar may be busbar 1030 and the neutral busbar may be busbar 1020, or vice versa, contained together in an insulation matrix 1010. Such a product may be manufactured, for example, as depicted in Fig. 11.

As shown in Fig. 11, each busbar at the desired width and thickness and materials of construction may be supplied into the manufacturing process wound on a spool. The respective busbars are unwound and fed through a tension controller and a preheating step, and into a die of an extrusion system that extrudes the plastic insulation around the busbars. The combined product goes through cooling trough and a capstan drive, through another tension controller, and then cut into desired lengths at a cutting station. The manufacturing process may also comprise a "spark testing" step to confirm the busbars are properly spaced and separated from one another in the combined product and do not present a risk of arcing or shorting, which testing step is depicted adjacent the downstream tension controller, but is not limited to any particular location after the extrusion and cooling step. The general process steps for extruding insulation onto a multiple metal members are well known in the art and further explanation is not necessary to be understood by those of skill in the art.

Returning to Figs. 10A-10E, the "Power Track" product may be supplied in one or more standard lengths, which lengths can then be joined with connectors, as depicted in Figs. 10C-10E. As shown in Figs. 10Da and 10E, each length of Power Track is preferably provided for installation with a predetermined length of each busbar protruding from the insulation on both ends (which may be accomplished as part of the manufacturing process by sending the cut lengths through a stripping station). Connector 1040 comprises insulation 1060 surrounding hollow conductive sheaths 1050 and 1052, each sheath dimensioned to slip over the protruding ends of the busbars. The connectors may be manufacturing in a similar manner as the power track, except with continuous spools of sheath material, comprising a rectangular annular cross section as shown in Fig. D, supplied to the extrusion step instead of busbars, and the connectors are cut into much shorter lengths than the Power Track lengths. As depicted in Fig. 10C, during installation, a first length of Power Track 1000a may be joined to a second length 1000b using connector 1040. As shown in Figs. 10C and 10E, the busbars, when joined, may have a gap 1070, such as for example, 2-3 mm, between the busbar 1020a of track 1000a and busbar 1020b of track 1000b. The electrical connection between the 1020a and 1020b may rely upon an interference fit between the conductive sheath and the busbar as shown for busbar 1020b in Fig. 10C, or may further comprise a conductive fastener 1080 applied to pierce the sheath and busbar, as shown for busbar 2020a in Fig. 10C. The fastener design may resemble any of the other fasteners depicted herein, may or may not protrude completely through the insulation on both sides of the connector, but preferably any protruding features of the fastener are insulated either as provided, or by adding an electrical insulator over top, such as using tape or the like.

It should be understood that although depicted in Figs. 10A,B and D as a 2-busbar track and connector, embodiments with 3 busbars would be essentially identical, with one extra busbar. Similarly, it should be understood that single insulated busbars may also be manufactured using a similar process and connected together using similar, single-busbar-sheath connectors. The Power Track product as described herein is not limited to any number of busbars. Whether integrated together in the Power Track product, or separately, the insulated busbars may be manufactured in a continuous length and cut to length as required.

Although the floor busbars may be preferably provided in a Power Track configuration for ease of installation, the invention is not limited to any particular configuration for the floor busbars.

DETAILED INSTALLATION EXAMPLE

SUMMARY

Heated flooring with an embedded carbon veil heats up quickly and consumes little energy. Carbon veils may be inserted into very thin products that traditional wires/tubes cannot typically accommodate. The carbon veil does not add any significant thickness to the overall product and will not negatively impact installation of the product. In addition, the carbon veil, due to its nonwoven structure, always maintains a constant resistance regardless of the size of the veil. This is an additional benefit relative to standard electrical wires, which have a non-uniform resistance, in which the resistance increases with the wire length. Similarly, liquid filled tubes also provide uneven heating over their length, because the liquid temperature drops over the length of the tube as heat dissipates along the run.

It should be understood that the invention is not limited to any particular materials of construction nor to any particular structural or performance characteristics of such materials, but that certain materials and structural performance characteristics may provide advantages, as set forth herein, and thus may be used in certain embodiments. Furthermore, it should be understood that the invention is not limited to any particular combination of components, and that each of the components as described herein may be used in any combination with any other components described herein.

In addition, although the invention is illustrated and described herein with reference to specific embodiments, the invention is not intended to be limited to the details shown. Rather various modifications may be made in the details within the scope and range of equivalence of the claims and without departing from the invention.

## Claims

**1.** A heating system for heating a building surface comprising a floor or a wall, the system comprising:

a section (510) of floor or wall covering including a laminar carbon veil heating element (100), an upper non-conductive layer (908) having an exposed surface facing away from the floor or wall, and a lower nonconductive layer (912) having an exposed surface facing the floor or wall, where the upper nonconductive layer (908) and the lower nonconductive layer (912) are laminated together with the laminar carbon veil heating element (100) embedded between the upper nonconductive layer (908) and the lower nonconductive layer (912)with the carbon veil heating element (100) disposed less than 1 mm from the exposed surface of the upper nonconductive layer (908), the carbon veil heating element (100) comprising at least two electrically conductive veil busbars (204, 208) spaced apart from one another;
at least one busbar track comprising at least two track electrical busbars (512, 514) electrically connected to the at least two veil busbars (204, 208), the at least two track busbars (512, 514) each comprising a conductive metal having a rectangular cross section having a width and a thickness in which the width is greater than 10X the thickness, the at least two track busbars (512, 514) connected to and electrically isolated from one another by a matrix of insulation;
a controller (502) electrically connected to the track busbars (512, 514) and configured to apply electrical current to the track busbars (512, 514) sufficient to cause the carbon veil (910) to produce heat in a portion thereof located between the veil busbars (204, 208).

**2.** The heating system of claim 1, wherein the surface covering comprises a floor covering, and the at least one busbar track is recessed in a subfloor upon which the section of floor covering is installed.

**3.** The heating system of claim 1, wherein the at last one busbar track is positioned behind a baseboard (702) adjacent the section of floor covering is installed.

**4.** The heating system of any one of claims 1-3, wherein the at least one busbar track extends along a length of the section of floor covering and is electrically connected to respective sets of veil busbars (204, 208) in the carbon veil heating element (100) in a plurality of locations.

5. The heating system of any one of the foregoing claims, further comprising a temperature sensor (506) positioned in a location operable to sense heat emitted from the section of flooring and in communication with the controller (502), wherein the controller (502) is configured to apply electrical current to the busbars based upon an input signal from the temperature sensor (506).

6. The heating system of any one of claims 1 -5, wherein the laminar carbon veil heating element (100) comprises a non-woven, wet-laid sheet comprising a plurality of individual unentangled fibers all having a length in a range of 6-12 mm.

7. The heating system of any one of claims 1-5 wherein the laminar carbon veil heating element (100) has a thickness of < 1mm.

8. The heating system of any one of claims 1-5 wherein the laminar carbon veil heating element (100) has a weight of <50 g/m2.

**Patentansprüche**

1. Heizsystem zum Beheizen einer Gebäudeoberfläche, die einen Boden oder eine Wand umfasst, wobei das System Folgendes umfasst:

   einen Abschnitt (510) eines Boden- oder Wandbelags, der ein laminares Kohlenstoff-Gewebe-Heizelement (100), eine obere nichtleitende Schicht (908) mit einer dem Boden oder der Wand abgewandten freiliegenden Oberfläche und eine untere nichtleitende Schicht (912) mit einer dem Boden oder der Wand zugewandten freiliegenden Oberfläche umfasst, wobei die obere nichtleitende Schicht (908) und die untere nichtleitende Schicht (912) zusammenlaminiert sind, wobei das laminare Kohlenstoff-Gewebe-Heizelement (100) zwischen der oberen nichtleitenden Schicht (908) und der unteren nichtleitenden Schicht (912) eingebettet ist, wobei das Kohlenstoff-Gewebe-Heizelement (100) weniger als 1 mm von der freiliegenden Oberfläche der oberen nichtleitenden Schicht (908) angeordnet ist, wobei das Kohlenstoff-Gewebe-Heizelement (100) mindestens zwei elektrisch leitende Schleier-Sammelschienen (204, 208) umfasst, die voneinander beabstandet sind;
   mindestens eine Stromschienenanordnung die mindestens zwei elektrische Stromschienen (512, 514) umfasst, die elektrisch mit den mindestens zwei Gewebe-Stromschienen (204, 208) verbunden sind, wobei die mindestens zwei Stromschienen (512, 514) jeweils ein leitfähiges Metall mit einem rechteckigen Querschnitt umfassen, das eine Breite und eine Dicke aufweist, bei der die Breite größer als das 10-fache der Dicke ist, wobei die mindestens zwei Stromschienen (512, 514) durch eine Isoliermatrix miteinander verbunden und elektrisch voneinander isoliert sind;
   eine Steuerung (502), die elektrisch mit den Stromschienen (512, 514) verbunden und so konfiguriert ist, dass sie an die Stromschienen (512, 514) einen elektrischen Strom anlegt, der ausreicht, um zu bewirken, dass das Kohlenstoff-Gewebe (910) in einem zwischen den Gewebe-Stromschienen (204, 208) befindlichen Teil davon Wärme erzeugt.

2. Heizsystem nach Anspruch 1, wobei der Oberflächenbelag einen Bodenbelag umfasst und die mindestens eine Stromschienenschiene in einen Unterboden eingelassen ist, auf dem der Abschnitt des Bodenbelags installiert ist.

3. Heizsystem nach Anspruch 1, wobei die mindestens eine Stromschiene hinter einer Fußbodenleiste (702) positioniert ist, die an den Abschnitt des Bodenbelags angrenzt, der verlegt ist.

4. Heizsystem nach einem der Ansprüche 1 bis 3, wobei sich die mindestens eine Stromschienenbahn über die Länge des Fußbodenbelagsabschnitts erstreckt und an mehreren Stellen mit entsprechenden Sätzen von Gewebe-Stromschienen (204, 208) im Kohleschleier-Heizelement (100) elektrisch verbunden ist.

5. Das Heizsystem nach einem der vorangehenden Ansprüche umfasst ferner einen Temperatursensor (506), der an einer Stelle positioniert ist, die in der Lage ist, die von dem Abschnitt des Bodenbelags abgegebene Wärme zu erfassen, und der mit dem Steuergerät (502) in Verbindung steht, wobei das Steuergerät (502) so konfiguriert ist, dass es auf der Grundlage eines Eingangssignals von dem Temperatursensor (506) elektrischen Strom an die Stromschienen anlegt.

6. Heizsystem nach einem der Ansprüche 1 bis 5, wobei das laminare Kohlenstoff-Gewebe-Heizelement (100) eine nicht gewebte, nassgelegte Bahn umfasst, die eine Vielzahl von einzelnen, nicht gewebten Fasern umfasst, die alle eine Länge im Bereich von 6 bis 12 mm aufweisen.

**7.** Heizsystem nach einem der Ansprüche 1 bis 5, wobei das laminare Kohlenstoff-Gewebe-Heizelement (100) eine Dicke von < 1 mm aufweist.

**8.** Heizsystem nach einem der Ansprüche 1 bis 5, wobei das laminare Kohlenstoff-Gewebe-Heizelement (100) ein Gewicht von <50 g/m2 hat.

**Revendications**

**1.** Système de chauffage pour le chauffage d'une surface de bâtiment comprenant un sol ou un mur, le système comprenant :

une section (510) de revêtement de sol ou de mur comportant un élément chauffant laminaire à voile de carbone (100), une couche supérieure non conductrice (908) présentant une surface exposée orientée vers l'extérieur du sol ou du mur, et une couche inférieure non conductrice (912) présentant une surface exposée face au sol ou au mur, où la couche supérieure non conductrice (908) et la couche inférieure non conductrice (912) sont stratifiées avec l'élément chauffant laminaire à voile de carbone (100) noyé entre la couche supérieure non conductrice (908) et la couche inférieure non conductrice (912), l'élément chauffant à voile de carbone (100) étant disposé à moins de 1 mm de la surface exposée de la couche supérieure non conductrice (908), l'élément chauffant à voile de carbone (100) comprenant au moins deux barres omnibus de voile électro-conductrices (204, 208) espacées l'une de l'autre ;
au moins une voie de barre omnibus comprenant au moins deux barres omnibus électriques de voie (512, 514) connectées électriquement aux au moins deux barres omnibus de voile (204, 208), les au moins deux barres omnibus de voie (512, 514) comprenant chacune un métal conducteur ayant une section transversale rectangulaire ayant une largeur et une épaisseur dont la largeur est supérieure à 10 fois l'épaisseur, les au moins deux barres omnibus de voie (512, 514) étant connectées l'une à l'autre et isolées électriquement l'une de l'autre par une matrice d'isolation ;
un contrôleur (502) connecté électriquement aux barres omnibus de voie (512, 514) et configuré pour appliquer aux barres omnibus de voie (512, 514) un courant électrique suffisant pour que le voile de carbone (910) produise de la chaleur dans une partie de celui-ci située entre les barres omnibus de voile (204, 208).

**2.** Système de chauffage selon la revendication 1, dans lequel le revêtement de surface comprend un revêtement de sol, et l'au moins une voie de barre omnibus est encastrée dans un sous-plancher sur lequel la section de revêtement de sol est installée.

**3.** Système de chauffage selon la revendication 1, dans lequel l'au moins une voie de barre omnibus est positionnée derrière une plinthe (702) adjacente à la section de revêtement de sol est installé.

**4.** Système de chauffage selon l'une quelconque des revendications 1 à 3, dans lequel l'au moins une voie de barre omnibus s'étend sur une longueur de la section de revêtement de sol et est connectée électriquement à des ensembles respectifs de barres omnibus de voile (204, 208) dans l'élément chauffant à voile de carbone (100) à une pluralité d'endroits.

**5.** Système de chauffage selon l'une quelconque des revendications précédentes, comprenant en outre un capteur de température (506) placé dans un emplacement exploitable pour détecter une chaleur émise par la section du revêtement de sol et en communication avec le contrôleur (502), dans lequel le contrôleur (502) est configuré pour appliquer un courant électrique aux barres omnibus en fonction d'un signal d'entrée provenant du capteur de température (506).

**6.** Système de chauffage selon l'une quelconque des revendications 1 à 5, dans lequel l'élément chauffant laminaire à voile de carbone (100) comprend une feuille non tissée, voie humide comprenant une pluralité de fibres individuelles non embrouillées ayant toutes une longueur comprise dans une plage de 6 à 12 mm.

**7.** Système de chauffage selon l'une quelconque des revendications 1 à 5 dans lequel l'élément chauffant laminaire à voile de carbone (100) a une épaisseur inférieure à 1 mm.

**8.** Système de chauffage selon l'une quelconque des revendications 1 à 5 dans lequel l'élément chauffant laminaire à voile de carbone (100) a un poids inférieur à 50 g/m2.

100

29gR2_Toho 25.0kV 15.1mm x25 SE(M)
2.00mm

FIG. 1A

208
206
204

FIG. 1B

210
214
Ta
Q
Hc
Convection
T2
A2
Diameter of cable or tube
0.25d
d
A1
212
216
218

FIG. 2

Surface Temp Ts °C
Q=1.6KW/m2
2mm
8mm
306
302
304
300
Embedded Power Film
Base Power Film
Power Film : PFI04.P_PFTG
32 mm insulating foam

FIG. 3

70
60
50
°C
40
30
20
10
0
TIME
400
embedded heater
402
base heater
404
Energy Used=480KJ
406
Energy Used=720KJ

FIG. 4

500
508
TEMPERATURE
SENSOR 506
510
514
512
CONTROLLER
502
POWER SUPPLY
504

FIG. 5

600
RECEIVE INPUT DESIRED TEMPERATURE
602
APPLY VOLTAGE TO COPPER STRIPS OF HEATING DEVICE
604
MONITOR TEMPERATURE OF HEATING DEVICE
606
DESIRED TEMPERATURE REACHED?
608
NO
YES
STOP APPLYING VOLTAGE TO COPPER STRIPS OF HEATING DEVICE
610

FIG. 6

SKIRTING BOARD 702
714
704
706
708
506 TEMPERATURE SENSOR
700
730
722
720
730
EMBEDDED HEATED FLOOR COVERING TYP 1mt / 2mt
+
-
512
514
TO POWER SUPPLY
RECESS IN FLOOR TO ACCOMMODATE POWER TRACK


FIG. 7A

LAMINATED WOOD FLOOR
706
708
HEATED (POWER FILM) FLOOR UNDERLAY COVERING
CLEARANCE HOLES FOR RIVET FASTENERS
712
BOLTED DOWN FASTENERS FOR POWER TRACK TO FLOOR
6 mm CSK BOLTS
710
RAW BOLT FASTENER IN FLOOR
722
720
722
720
722
720

FIG. 7B

FIG. 7C

FIG. 7D

TEMPERATURE SENSOR 506
SKIRTING BOARD 702
714
800
512
TO POWER SUPPLY
708 FASTENER
EMBEDDED HEATED FLOOR MATERIAL TYP WIDTH 1mt - 2mt
700
24-48 VDC OR 220/240 VAC MAINS
514
Al BUS BARS 16 mm x 1,5 mm
POWER TRACK
RIVNUT FASTENER IN POWER TRACK
4,5 mm THICK POWER TRACK WALL
802
804
6
50 mm
706 RIVET FASTENER 5 mmΦ
708
POWER FILM HEATER
TYPICAL
FLOOR COVERING WITH POWER FILM EMBEDDED HEATER
WALL
14 mm
6 mm
PLASTER BOARD
710
SKIRTING BOARD
712
FLOOR

FIG. 8

902
904
906
910
908
912
900
914
916

FIG. 9

A
A
1030
1010
1000
1020
B
B
1010
1030
1000
1020
1080
1050
1070
1060
1010a
1000a
1020a
1040
1000b
1020b
1010b
1060
1052
1050
B
B
1040
2-3mm approx
gap.

FIG. 10A

FIG. 10B

FIG. 10C

FIG. 10E

FIG. 10D

Power track
Guillotine
Cutting station
Spark testing
Tension/Section
control
Capstan
Drive
Cooling trough
Plastic
feed
extruder
&die
Preheat
Tension
Control
Unwind

FIG. 11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- GB 2414910 A
- DE 202008004481 U1